**Europäisches Patentamt**

**European Patent Office**

**Office européen des brevets**

(19)

(11) Veröffentlichungsnummer: **0 066 216**
**B1**

(12) **EUROPÄISCHE PATENTSCHRIFT**

(45) Veröffentlichungstag der Patentschrift:
14.08.85

(51) Int. Cl.⁴: **B 65 D 83/06**, G 01 F 11/26

(21) Anmeldenummer: **82104459.1**

(22) Anmeldetag: **21.05.82**

(54) **Aufsatz zur dosierten Ausgabe von fliessfähigen Medien.**

(30) Priorität: **21.05.81 DE 3120234**

(43) Veröffentlichungstag der Anmeldung:
**08.12.82 Patentblatt 82/49**

(45) Bekanntmachung des Hinweises auf die Patenterteilung:
**14.08.85 Patentblatt 85/33**

(84) Benannte Vertragsstaaten:
**AT BE CH DE FR GB IT LI LU NL SE**

(56) Entgegenhaltungen:
**CH - A - 439 083**
**DE - A - 2 735 372**
**DE - A - 3 017 457**
**DE - B - 2 136 033**
**DE - B - 2 528 006**
**GB - A - 1 495 805**

(73) Patentinhaber: **mega product- und Verpackungsentwicklung Marketing GmbH & Co. KG, Fröbelstrasse 15, D-5600 Wuppertal 1 (DE)**

(72) Erfinder: **von Schuckmann, Alfred, Kervendonk 63, D-4178 Kevelaer 2 (DE)**

(74) Vertreter: **Rieder, Hans-Joachim, Dr., Corneliusstrasse 45 Postfach 11 04 51, D-5600 Wuppertal 11 (DE)**

## Beschreibung

Die Erfindung bezieht sich auf einen Aufsatz zur dosierten Ausgabe von fliessfähigen Medien aus einem Vorratsbehälter durch einen beim zweiten Umwenden des Aufsatzes in die Tieflage tretenden Auslauf, wobei zur Bildung eines Z-förmigen Medienausgabeweges sich etwa quer zum Füllgutzulauf erstreckend eine Prallwand vorgesehen ist, die eine Winkelkehle formt, deren freier Schenkel von einer schrägstehenden, endseitig abgewinkelten Gleitwand überlappt ist, die einen Durchtrittsspalt zur Prallwand belässt und deren Anfangsbereich vor dem Auslaufabschnitt liegt.

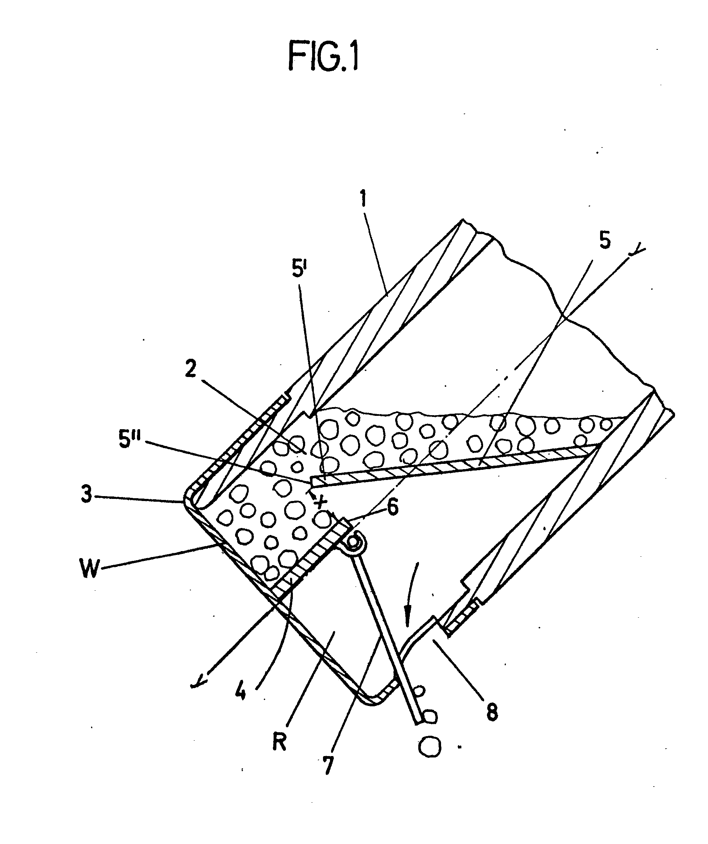

Ein auf dem Markt befindliches Gerät ist in Fig. 1 der Zeichnung veranschaulicht. Es dient zur Ausgabe von Grob-Granulat, wie beispielsweise Erdnüssen. Das gegen die teils von einem Deckel und teils vom Behältergehäuse gebildete Prallwand tretende Granulat gelangt mehr oder weniger dosiert durch den Durchtrittsspalt in den Bereich einer querliegenden Ausgabeöffnung im Deckel. Die Gerätewand ist in diesem Bereich entsprechend zurückgeschnitten. In normaler Standlage des Gerätes fällt eine den Ausgabeweg verschliessende Klappe. Diese Klappe verhindert andererseits bei Ausgabe, dass Granulat in den deckenseitigen Bereich des Deckels gerät. Würde die Klappe fortgelassen, so würde sich in diesem Deckelraum Granulat ansammeln. Schwenkt man ein solches Gerät dann wieder in seine Grundstellung zurück, so findet die restliche Ausgabe des sich im Deckelraum angesammelten Gutes statt. Die Anordnung einer Klappe bringt dagegen zusätzlichen baulichen Aufwand.

Durch die DE-OS 2 735 372 ist ein gattungsmässer Aufsatz zur dosierten Ausgabe von fliessfähigen Medien aus einem Vorratsbehälter bekannt, bei dem der Z-förmige Ausgabeweg eine im wesentlichen quer zum Füllgutzulauf ausgerichtete Prallwand vorsieht, die eine Winkelkehle formt, deren einer Schenkel von einer schrägstehenden, endseitig abgewinkelten Gleitwand überlappt wird. Letztere lässt einen Durchtrittsspalt zur Prallwand frei. Der Anfangsbereich der Gleitwand liegt vor dem Auslaufabschnitt. Dort erstrecken sich die den Z-förmigen Medienausgabeweg bringenden Wände über die gesamte Querschnittsbreite des eine zylindrische Wandung aufweisenden Aufsatzes. Dies führt aufgrund der Z-Winkelräume zu einandergereihten Kammern jeweils unterschiedlichen Volumens. Die Aufteilung ist so, dass zwei im Querschnitt kreisabschnittförmige, gegenläufige Durchtrittsquerschnitte vorliegen; zwischen denen liegt eine verhältnismässig grosse Dosierkammer, die von der vom Restquerschnitt gebildeten Kammer des Zylinders gebildet ist. Dies ist nachteilig insofern, als durch diesen Querschnittswechsel eine Ausgabeverzögerung auftritt. Gerade bei kippabhängigen Spendern ist es wünschenswert, dass die dosierte Teilmenge schlagartig frei wird und nicht langsam rieselt oder stockend ausfliesst. Hierunter leidet auch die Dosierungsgenauigkeit. Durch Verharren in der Kippstellung und leichtes Bewegen füllt sich die grosse Kammer über das angestrebte, durch das freie Gleitwandende bestimmte Mass hinaus weiter an. Die Funktion hängt im wesentlichen aber auch von der Beschaffenheit des auszugebenden Gutes ab, also ob es sich um Grobkorn bis Feingranulat oder Flüssigkeit handelt.

Aufgabe der Erfindung ist es, einen gattungsgemässen Aufsatz in herstellungstechnisch einfacherer, gebrauchsvorteilhafter Weise so auszubilden, dass eine vom Querschnittsmass des Aufsatzes unabhängige, genauere Dosierung des auszugebenden Gutes erreicht wird, und zwar so, dass sogar die kontrollierte Ausgabe von Feinstgranulat bis hin zu flüssigem Füllinhalt ermöglicht ist.

Gelöst ist diese Aufgabe durch die im Anspruch 1 angegebene Erfindung.

Die Unteransprüche sind vorteilhafte Weiterbildungen des erfindungsgemässen Aufsatzes.

Zufolge solcher Ausgestaltung ist ein gattungsgemässer Aufsatz zur dosierten Aufgabe von fliessfähigen Medien von insbesondere erhöhtem Gebrauchswert geschaffen: Die Ausgabe des Gutes erfolgt über einen Kanal im Aufsatz. Dieser bringt optimale Voraussetzungen für die exakte Dosierung. Ein solcher Kanal kann ganz auf den Querschnittsbedarf und das Fliessverhalten abgestellt sein, und zwar unabhängig von der sonstigen Gestalt des Aufsatzes. Auf diese Weise ist der nachteilige wechselnde Profilquerschnitt vermieden. Trotzdem kann eine dem Behälter angepasste Grösse des Aufsatzes zum Einsatz kommen. Der Mündungsabschnitt bildet als Kanalanfang praktisch eine Pforte in einem sonst geschlossenen Restquerschnitt. Beim Kippen eines mit einem solchen Aufsatz versehenen Gefässes rutscht bzw. fliesst das auszugebende Gut auf den ganzen Querschnittsbereich, wobei aber nur das in den Kanal als Teilquerschnitt der gesamten Zuströmbreite eintretende Gut gleichsam querschnittskontrolliert der Dosierung zugeführt wird. Über den Kanal, welcher ausser einer im Bereich des abgewinkelten Endes der Gleitwand vorgesehenen Querschnittsreduzierung auf seiner bis zum Beginn des Auslaufabschnitts reichenden Länge etwa gleichen Querschnitt besitzt, gelangt das auszugebende Gut dosiert nach aussen. Die Dosiermenge wird exakt erreicht. Es liegt keine grössere Kammer mehr vor, die sich unkontrolliert weiterfüllt.

Die Reduzierung des Ausgabeweges auf einen praktisch durchgehend gleichen Kanalquerschnitt bringt vor allem a' 'ch ein zufriedenstellendes Dosierverhalten bei flüssigem Füllinhalt. Das Medium wird in einem Kanal besser beherrscht als in einem von durchgehenden Querwänden aufgeteilten Zylinderraum gebildeten Labyrinth. Anspruch 2 gibt die Mittel an, welche den verdeckten Teil der muldenartigen Dosierkammer begrenzen. Durch die Massnahme nach Anspruch 3 ist eine Ausgestaltung erreicht, die das Nachrutschen insbesondere von Granulat in den verdeckten Abschnitt der Dosierkammer begünstigt, und zwar einfach durch Schrägstellung der Prallwand. Im Anschluss an die so gebildete Gleitwand-Rutsche schliesst die von der Prallwand gebildete gegenläufige Rutsche an, welche das Füllgut in einen kehlenartigen Winkelraum gleiten lässt.

Der Gegenstand der Erfindung ist nachstehend anhand eines zeichnerisch veranschaulichten Ausführungsbeispieles näher erläutert. Es zeigt:

Fig.1 das Gerät gemäss Stand der Technik in Teildarstellung, und zwar im Schnitt sowie in Ausgabestellung,

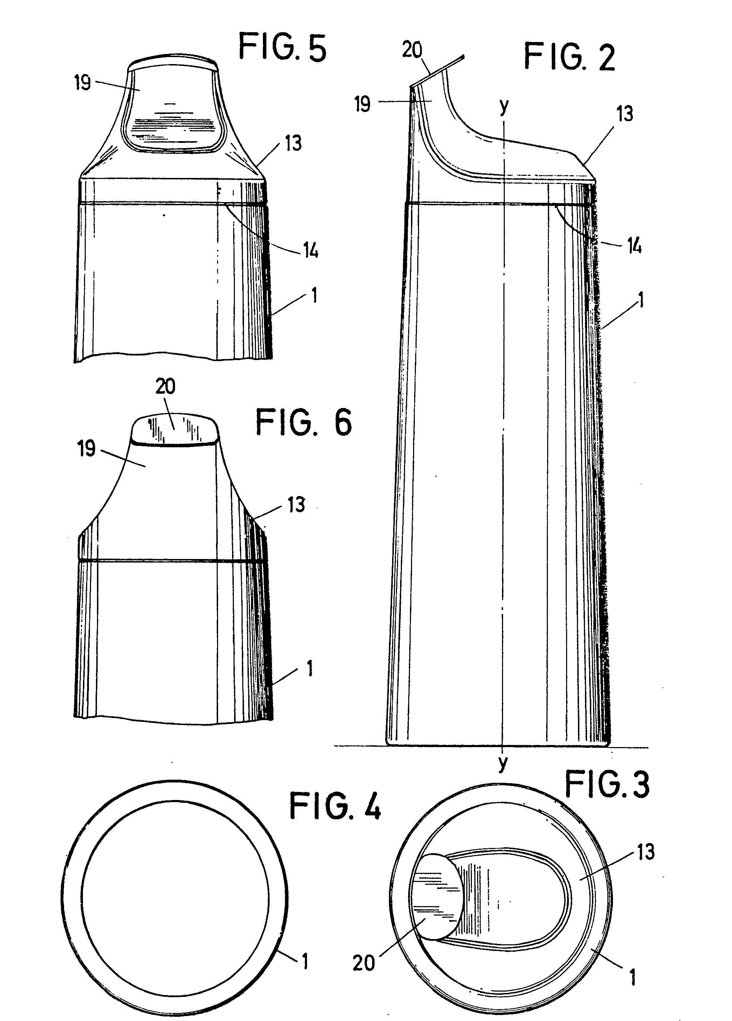

Fig. 2 das erfindungsgemässe Gerät in Seitenansicht,

Fig. 3 die Draufsicht hierzu,

Fig. 4 die Unteransicht des Gerätes,

Fig. 5 die Rückansicht des Gerätes, oberer Teil,

Fig. 6 die Vorderansicht hierzu,

Fig. 7 das dem Vorratsbehälter aufsetzbare Kopfstück in Einzeldarstellung, und zwar in Unteransicht,

Fig. 8 den Schnitt gemäss Linie VIII-VIII in Fig. 7 und

Fig. 9 das Gerät in Ausgabestellung, und zwar im Längsschnitt.

Das Gerät gemäss Stand der Technik weist kopfseitig eine gegenüber dem lichten Durchmesser seines Vorratsbehälters 1 verjüngte Mündung 2 auf. Vor dieser Mündung erstreckt sich eine von einem kappenförmigen Deckel 3 und einem Einsatz 4 gebildete Prallwand W. Geräteinnenseitig erstreckt sich vor der Mündung 2 des weiteren eine schrägstehende Gleitwand 5. Deren freies Ende ist in einem einen Durchtrittsspalt bildenden Abstand x zum gleitwandseitig ausgerichteten Ende der Prallwand angeordnet. Die behälterseitige Stirnwand 6 des Endes der Prallwand und die deckelseitig weisende Stirnwand 5'' des freien Endes 5' der Gleitwand 5 liegen in einer höhengleichen Querebene zur Behälterlängsmittelachse y-y des Gerätes.

Aussenseitig des Endes der Prallwand ist am Einsatz 4 eine Schliess- und Leitklappe 7 angelenkt, welche bei Standstellung des Gerätes eine seitlich im Deckel 3 angeordnete Ausgabeöffnung 8 verschliesst. In Ausgabestellung hingegen verhindert diese Schliess- und Leitklappe 7, dass sich das Ausgabegut im Deckelraum R ansammelt.

Beim Anmeldungsgegenstand ist die Schliess- und Leitklappe 7 verzichtbar. Dort erstreckt sich die als Kanal K ausgebildete Mündung 2 in die in Ausgabestellung schräg abfallende Verlängerungsrichtung der Prallwand W, welche Prallwand W über eine kehlenartige Ausrundung 9 in den weiter in Richtung der Gleitwand 5 weisenden freien Schenkel 10 derselben übergeht. Die schmale Stirnwand 6 dieses Schenkels 10 der Prallwand W endet in einem den Ausgabeweg fortsetzenden Abstand vor der Gleitwand 5. Das freie Ende 5' der Gleitwand 5 überlappt das innere Ende des Schenkels 10, d.h. die Stirnwand 6 des Schenkels 10 der Prallwand liegt nicht mehr in einer gemeinsamen Querebene mit der korrespondierenden Stirnwand 5'' des freien Endes 5' der Gleitwand 5. Das innere Ende des Schenkels bildet einen etwas überhöhten Damm einer von der spitzwinkligen Prallwandkontur umschriebenen Dosierkammer. Über die Mündung 2 in diese einstürzendes Füllgut F wird an einem Überschwappen gehindert.

Von dem die Dosierkammer bildenden Kanalabschnitt setzt sich der Kanal K in einen gegenläufig zum Füllgutzulauf liegenden Ergänzungsabschnitt 11 fort. Letzterer weist in Richtung des Anfangsbereiches 5''' der Gleitwand 5.

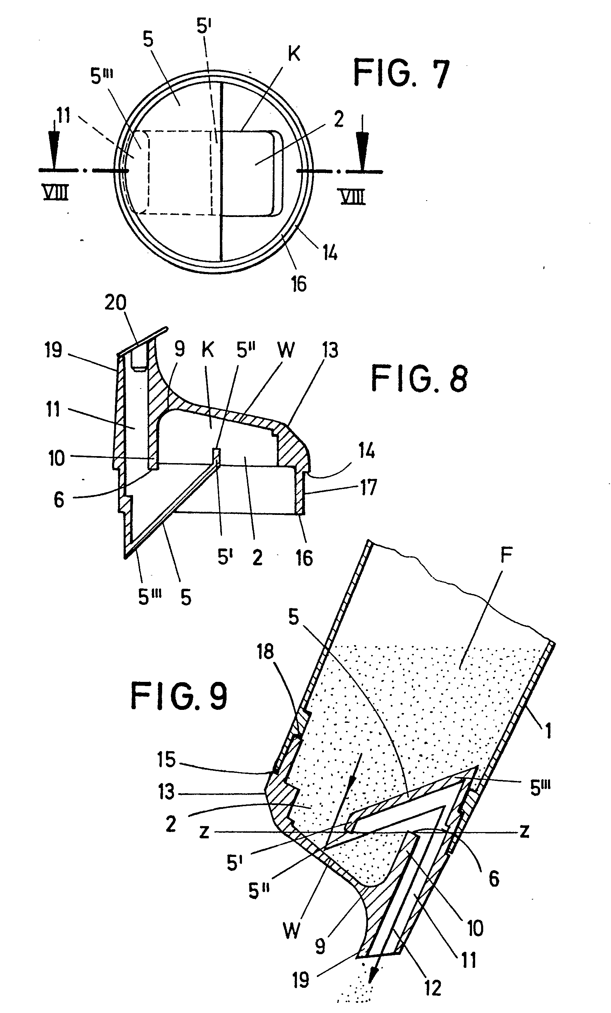

In Standstellung hält der gleitwandseitige, spitzwinklig zulaufende Abschnitt des Kanals den beim erstmaligen Umwenden des Gerätes abgeteilten, also dosierten Vorrat bereit. Wird dieser bei erneut in Tieflage tretender Mündung 2 ausgegeben, sammelt sich die nächste abgeteilte Menge gleichzeitig in der von der Prallwand W umschriebenen Dosierkammer. Der Ausgabeweg des Füllgutes F ist im wesentlichen Z-förmig (vgl. Pfeil 12 in Fig. 9).

Die überlappende Zuordnung des kanalwandbildenden Endes 5' zum Schenkel 10 führt zu einer Art Vogeltränken-Effekt. In der Ausgabestellung (übliche Schütt-Neigungsstellung des Gerätes) bildet sich in der Dosierkammer ein von den Stirnwänden 5'' bzw. 6, d.h. von den einander nächstliegenden Kanten derselben bestimmtes Niveau z-z. Insoweit können auch Medien wie Sahne, Ketchup usw. dosiert werden.

Die Prallwand W ist als innenseitige Verlängerung der Kanalwand ausgebildet. Kanal K und Gleitwand 5 sind einem Deckel und Einsatz vereinigenden, deckelförmig aufsetzbaren Kopfstück 13 des Vorratsbehälters 1 angeformt. Die Formnaht verläuft zweckmässig in der Ebene der Schnittlinie VIII-VIII in Fig. 7. Das Kopfstück ist, zumindest was die Steckverbindungszone betrifft, kreisrund gestaltet und liegt mit einer peripheren Ringschulter 14 auf dem Stirnrand 15 des Vorratsbehälters 1 auf. Der Stirnrand 16 des Steckvorsprunges 17 tritt zusätzlich noch gegen eine Ringschulter 18 einer vorratsbehälterinnenseitig vorgesehenen Ringrippe. Statt einer Steckverbindung, beispielsweise mit zusätzlicher Klebung, kann auch eine Schraubverbindung gewählt werden, so dass der Inhalt nach Entleerung wieder bequem ergänzt werden kann.

Die von der Kopfstückdecke gebildete Prallwand W setzt sich in einen exzentrisch liegenden Auslauf 19 des Kanal-Ergänzungsabschnittes 11 fort. Letzterer lässt sich durch eine Verschlussplatte 20 verschliessen.

Der die Mündung 2 bildende Kanalabschnitt und der die seitlich dazu in Ausgaberichtung versetzt liegende Dosierkammer bildende Kanalabschnitt sind etwa querschnittsgleich gehalten. Eine Querschnittsreduzierung liegt hingegen im direkten Erstreckungsbereich zwischen dem freien, in Richtung des Kanals abgewinkelten Ende 5' und der Prallwandzone vor. Die dortige, pfortenartige Querschnittsreduzierung führt zu einer gewissen Beruhigung des in die Dosierkammer fliessenden Füllgutes. Der vom Z-Steg bestimmte Bereich ist vom inneren Ende 10 an wiederum querschnittskleiner gehalten, wie dies aus Fig. 7 erkennbar ist.

Die exzentrische Lage des Auslaufs 19 mit entsprechend in Richtung dieses Auslaufs ausgerichtetem Deckenverlauf des Kopfstückes 13 leitet den Benutzer schon aus dieser Formgestaltung heraus zu einer sinngerechten Kipp-Handhabung an, so dass besondere Benutzungshinweise unnötig sind.

**Patentansprüche**

1. Aufsatz zur dosierten Ausgabe von fliessfähigen Medien aus einem Vorratsbehälter (1) durch einen beim zweiten Umwenden des Aufsatzes in die Tieflage tretenden Auslauf (19), wobei zur Bildung eines Z-förmigen Medienausgabeweges sich etwa quer zum Füllgutzulauf erstreckend eine Prallwand (W) vorgesehen ist, die eine Winkelkehle formt, deren freier Schenkel (10) von einer schrägstehenden, endseitig abgewinkelten Gleitwand (5) überlappt ist, die einen Durchtrittsspalt zur Prallwand belässt und deren Anfangsbereich (5''') vor dem Auslaufabschnitt (11) liegt, dadurch gekennzeichnet, dass der erste Abschnitt des Z-förmigen Ausgabeweges vom Mündungsabschnitt (2) eines Kanals (K) gebildet ist, welcher ausser einer im Bereich des abgewinkelten Endes (5') der Gleitwand (5) vorgesehenen Querschnittsreduzierung auf seiner bis zum Beginn des Auslaufabschnittes (11) reichenden Länge etwa gleichen Querschnitt besitzt.

2. Aufsatz nach Anspruch 1, dadurch gekennzeichnet, dass das innere Ende (6) der Prallwand (W) in Überlappung steht zum schräg abfallenden Verlauf der Gleitwand (5).

3. Aufsatz nach den Ansprüchen 1 und 2, dadurch gekennzeichnet, dass die Prallwand (W) in Richtung des Auslaufes (19) spitzwinklig geneigt zur Querschnittsebene des Aufsatzes liegt.

## Claims

1. An attachment for the release of flowable media in regulated amounts from a storage container (1) through an outlet (19) which upon the second inversion of the attachment comes into the low position, where for the formation of a Z-shaped path for the release of the media a deflector wall (W) is provided, which extends approximately transversely to the approach of the filling and which forms an angular throat of which the free side (10) is overlapped by a slidewall (5) standing obliquely and cranked at the end, which leaves a gap from the deflector wall to form a passage and the initial region (5''') of which lies in front of the outlet portion (11), characterized in that the first portion of the Z-shaped release path is formed by the mouth portion (2) of a channel (K) which appart from a reduction in cross-section, provided in the region of the cranked end (5') of the slidewall (5), has over the length of it reaching as far as the start of the outlet portion (11) approximately the same cross-section.

2. An attachment as in Claim 1, characterized in that the inner end (6) of the deflector wall (W) overlaps the obliquely descending course of the slidewall (5).

3. An attachment as in Claims 1 and 2, characterized in that the deflector wall (W) in the direction of the outlet (19) lies inclined at an acute angle to the plane of cross-section of the attachment.

## Revendications

1. Appareil pour la distribution dosée de matières fluides à partir d'une trémie de stockage (1), au moyen d'une sortie (19) arrivant dans la position basse au cours du second retournement de l'appareil, où il est prévu, pour la formation d'un parcours en forme de Z de distribution des matières, s'étendant à peu près transversalement à l'arrivée de matière, une paroi de rebondissement (W) qui forme une auge en équerre, dont l'aile libre (10) est surmontée d'une paroi de glissement (5) se dressant obliquement, repliée a son extrémité, qui laisse une fente de passage par rapport à la paroi de rebondissement, et dont la zone initiale (5''') se trouve devant la section de sortie (11), appareil caractérisé en ce que la première section du parcours en forme de Z de la distribution est formée par la section de l'embouchure (2) d'un canal (K) qui possède une section sensiblement égale sur la longueur, allant jusqu'au commencement de la section de sortie (11), à part une réduction de section prévue dans la zone de l'extrémité repliée (5') de la paroi de glissement (5).

2. Appareil suivant la revendication 1, caractérisé en ce que l'extrémité intérieure (6) de la paroi de rebondissement (W) est en chevauchement par rapport au tracé descendant obliquement de la paroi de glissement (5).

3. Appareil suivant les revendications 1 et 2, caractérisé en ce que la paroi de rebondissement (W) est inclinée suivant un angle aigu par rapport au plan de la section transversale du dispositif, dans la direction de la sortie (19).

# FIG.1

FIG. 5

FIG. 2

FIG. 6

FIG. 4

FIG. 3

FIG. 7

FIG. 8

FIG. 9